(19) Europäisches Patentamt
European Patent Office
Office européen des brevets

(11) EP 2 108 691 A1

(12) EUROPEAN PATENT APPLICATION

(43) Date of publication:
**14.10.2009 Bulletin 2009/42**

(21) Application number: **08103501.6**

(22) Date of filing: **11.04.2008**

(51) Int Cl.:
***C09K 19/38*** *(2006.01)* ***G02B 5/30*** *(2006.01)*
***G02F 1/13363*** *(2006.01)* ***G02F 1/1337*** *(2006.01)*
***C08J 5/18*** *(2006.01)*

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Stichting Dutch Polymer Institute**
**5612 AB Eindhoven (NL)**

(72) Inventors:
- **Serrano Ramon, Blanca**
  **5600 MB, EINDHOVEN (NL)**
- **Bastiaansen, Cornelis Whilhelmus Maria**
  **5600 MB, EINDHOVEN (NL)**
- **Broer, Dirk Jan**
  **5600 MB, EINDHOVEN (NL)**

(74) Representative: **DeltaPatents B.V.**
**Fellenoord 370**
**5611 ZL Eindhoven (NL)**

# (54) Structured films with a controlled tilted molecular orientation and shape using a dichroic photoinitiator.

(57) The invention relates to Process for the preparation of a layer comprising oriented molecules on a substrate, comprising the steps of
a. providing a substrate
b. applying a film of a coating composition on the substrate
c. forming a splay or bend liquid crystalline structure within the film
d. applying a dose of electromagnetic radiation to the film to at least partly cure the film,

wherein the coating composition comprises at least one liquid crystalline material having at least one polymerizable group and a monomer having at least two polymerizable groups, and a dichroic photoinitiator. The invention relates to the preparation of three dimensional structures by using a polarization hologram on a coating composition which has a splay orientation.

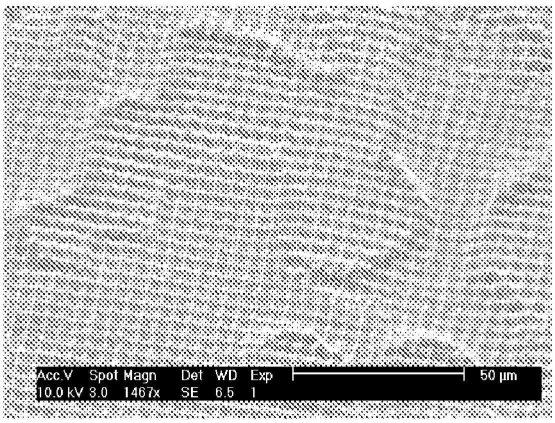


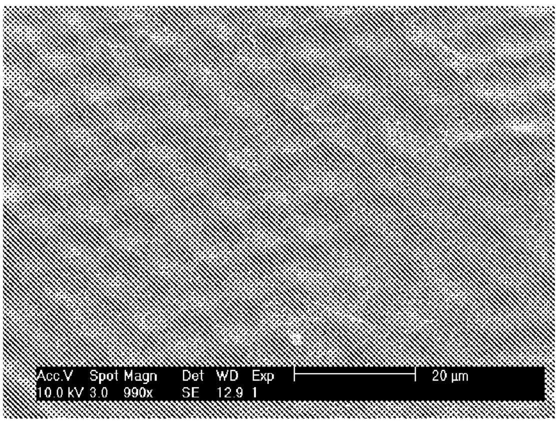


**Figure 5:** SEM pictures of the polymer pyramid structures. They were created by exposing an LC cell with an LPP alignment layer at the bottom substrate and a homeotropic alignment layer at the top substrate to a polarization hologram.



Printed by Jouve, 75001 PARIS (FR)

## Description

The present invention relates to a method of providing an oriented layer or structure having an optical main axes, which is tilted relative to the normal of the surface of the layer and to a three dimensional polymeric structure made from a liquid crystalline material after exposure through a mask or after exposure with a polarization hologram. It also related to a polymer film or layer in which the molecular axis of a specific liquid crystalline group makes a rotation from parallel or close to parallel at the interface of a substrate to an angle at the opposite interface with for example air, where this angle is controlled by the method of manufacturing.

Methods for making oriented layers are known in the art. EP 0 467 456 discloses a process wherein a method for providing a surface layer on a substrate is disclosed. The surface layer can bring about an inclined orientation of the molecules of the liquid crystalline layer applied to the surface layer at the interface between surface layer and the liquid crystalline layer. The orientation of at least part of the liquid crystalline (LC) molecules is fixed. WO97/44702 discloses a compensator comprising a retardation foil having a tilted optical main axis.

These references disclose complex ways of making multilayered films, wherein the tilted angle is depending on the applied construction of the LC cell, the choice of LC materials and the thickness of the applied layer containing the LC materials. Fixation can be performed using UV irradiation, with the aid of photoinitiators. The films can only been made in multi steps, whereby control of tilted angle is difficult, especially when large surfaces need to be prepared. A special difficulty is that the tilt is determined by the thickness of the film as it is set by the so-called elastic properties of the liquid crystal molecules which cannot be freely chosen. But also the optical properties, as the optical retardation of the film, are determined by the thickness of the film. This means that these two parameters, tilt angle and optical retardation, cannot be chosen independently. The right combination of these parameters is of importance for their function, e.g. as optical retardation film to improve on the viewing angle properties of liquid crystal displays.

WO 2006/059895 discloses the synthesis of switchable narrow band reflectors produced in a single curing step. Use is made of reactive monomers having at least two polymerizable groups, non-reactive liquid crystals and dichroic photoinitiators.

The present invention has an object to provide a simple and versatile process for making films having a tilted angle (preferably at the interface with air), wherein the tilted angle can be controlled in a simple and reproducible way. It is also an object of the present invention to provide a new way to make three dimensional polymeric structures on a substrate with the aid of a single exposure step.

The invention relates to a process for the preparation of a layer comprising oriented molecules on a substrate, comprising the steps of

a) providing a substrate
b) applying a film of a coating composition on the substrate
c) forming a splay or bend liquid crystalline structure within the film
d) applying a dose of electromagnetic radiation to the film to at least partly cure the film,

wherein the coating composition comprises at least one liquid crystalline material having at least one polymerizable group and a monomer having at least two polymerizable groups, and a dichroic photoinitiator.

The invention also relates to a three-dimensional structure prepared with the process of the invention, using UV irradiation or specifically polarization holography.

The substrate used in the present invention can be any inorganic or organic material. Preferred substrates are highly transparent, like for example glass, or transparent polymer films. For optical application the film needs to be transparent and free, or close to free, from birefringence. A suitable polymer substrate is cellulose triacetate. In occurring cases the substrate also might add an optical property to the film such as some well controlled planar birefringence. In that case for instance a stretched polycarbonate film can be used.

The orientation of the reactive liquid crystal mixture needs to be given a preferential direction at the surface of the substrate. This can done by modifying the substrate with a surface that is able to align the liquid crystalline materials in a desired way. Such a surface is often called an alignment surface or an alignment layer. Alignment layers can be prepared by conventional means, such as by rubbing a polymer surface such as polyimide or polyvinyl alcohol or the polymer substrate itself. It can also be made by obliquely deposited silicondioxide. Alternatively the preferential direction of orientation can also be established by applying an external field such as an electrical field or a magnetic field or by a mechanical field, e.g. obtained by shear forces. It is preferred that the alignment of the liquid crystalline molecules at the surface of the substrate is parallel or close to parallel to this surface. Preferably the liquid crystalline molecules form a splay or bend structure, wherein the molecules have a substantially parallel orientation at the surface of the substrate and a homeotropic orientation at a certain distance away form the surface of the substrate. A homeotropic alignment may be achieved spontaneously for example by proper selection of the polymerizable liquid crystal mixture and exposure of a layer thereof to an air surface. Surfactants may also be used to induce homeotropic alignment. A small pretilt angle

at the substrate side is often preferred over a fully planar alignment as it helps the molecules to bend into the same direction without the formation of domains with opposite bending or splay direction. Most methods using rubbing, e.g. on polyimide, provide a pretilt angle of one or two degrees which is sufficient for our purpose. Larger pretilt angles, such as angles between 2 and 20 degrees can also be useful and can be established by special polyimide types with surfactant moieties which are known to those who are skilled in the art. Also other ways to make splay structures are known to the skilled man.

A pattern-wise orientation can be conveniently obtained using the well known photo-alignment or by using locally applied electric and/or magnetic fields.

The coating composition may be applied onto the substrate by any process known in the art of (wet) coating deposition. Examples of suitable processes are spin coating, dip coating, spray coating, flow coating, meniscus coating, doctor's blading, capillary coating, and roll coating.

The coating composition of the present invention contains at least one liquid crystalline material comprising at least one polymerizable group. Preferably, at least part of the liquid crystalline material contains two or more polymerizable groups. Such liquid crystalline materials containing one or more polymerizable groups are considered to be monomers. The liquid crystalline materials can be oriented prior to polymerization. Polymerization causes such an orientation to be frozen as it were. It is noted that such a mixture may additionally comprise non-reactive (liquid-crystalline) materials and/or non-liquid-crystalline monomers.

For the reactive group use can be made of groups like for example acrylate, methacrylate, epoxy, vinyl, vinylether, thiol-ene and oxetane. However, use is preferably made of reactive groups in the form of (meth)acrylate groups. Monomers comprising a(n) (meth)acrylate group proved to be excellently processable.

In principle, the monomers can be thermally polymerized. In practice for the present invention, radical-polymerization under the influence of electromagnetic radiation or actinic radiation, in particular UV light, is the best way of polymerizing the monomers in step d) of the process of the present invention. This has the advantage that persons skilled in the art have the freedom to work at temperatures which offers the best performance in coating behaviour and preferred liquid-crystalline properties.

Liquid-crystalline molecules which can be used within the scope of the invention correspond to the general formula

$$A\text{-}B\text{-}M\text{-}(B)\text{-}(A)$$

In this formula, M represents a group whose chemical structure and rigid conformation cause the molecule to become highly anisotropic. Suitable M groups are disclosed, inter alia, in USP 4,398,803 and WO 95/24454. B represents a so-called spacer group. Dependent upon the desired properties, the monomers used comprise one or two spacer groups. Spacer groups are also known from the above-mentioned patent publications. A represents a reactive group of the above-mentioned type. The liquid-crystalline molecules may comprise one or more reactive groups. As stated above, a part of the liquid-crystalline molecules in the mixture may be non-reactive. In that case, these molecules do not comprise A-type groups.

A preferred embodiment of the oriented layer is **characterized in that** the polymerized material comprises liquid-crystalline molecules which are provided, at one end, with a non-polar group and, at the other end, with a polar group. The presence of this type of liquid-crystal molecules causes the liquid-crystalline material of the mixture to be polymerized to assume the homeotropic phase at a short distance from the substrate. As a result, the desired ordering of the tilt in the liquid-crystalline material of the retardation foil takes place almost spontaneously. Consequently, in this case treatments with electric fields to induce said tilt are redundant. This simplifies the manufacture of such layers.

Liquid crystalline molecules having a polar end and a non-polar end correspond to the general formula

$$R\text{-}B\text{-}M\text{-}Z$$

where B and M have the above-mentioned meaning. In this case, the spacer group B serves as the non-polar group of the molecule and Z represents a polar group, such as -CN, -OH, $-NO_2$, -COOH or $-C(O)O-CH_3$, but also phosphates, phosphonates and sulphonates are possible. R represents a further substituent which can reactive or non-reactive.

The mixture to be polymerized also comprises monomers having two or more reactive groups of the above-mentioned type. The presence of monomers having two or more polymerizable groups is important for making a three dimensional network after polymerization. During polymerization, the presence of such monomers leads to the formation of a three-dimensional network. This causes the optical properties of the inventive oriented layer or structure to become less sensitive to variations in temperature. In particular for layers which are employed at different temperatures, such a

small temperature-dependence of the optical properties is very favourable.

The monomers comprising at least two polymerizable groups preferably comprise a liquid-crystalline group.

Alternatively monomers having one or more, preferably two or more polymerizable groups may be present that are absent of a liquid crystalline group. Their presence may be helpful for lowering viscosity of the coating composition, improvement of mechanical properties of the cured film, change of network crosslink density and the like.

Examples of reactive monomers having at least two crosslinking groups per molecule include monomers containing (meth)acryloyl groups such as trimethylolpropane tri(meth)acrylate, pentaerythritol (meth)acrylate, ethylene glycol di(meth)acrylate, tetraethylene glycol di(meth)acrylate, polyethylene glycol di(meth)acrylate, 1 ,4-butanediol di(meth) acrylate, 1 ,6-hexanediol di(meth)acrylate, neopentyl glycol di(meth)acrylate, polybutanediol di(meth)acrylate, tripropyleneglycol di(meth)acrylate, glycerol tri(meth)acrylate, phosphoric acid mono- and di(meth)acrylates, C7-C20 alkyl di (meth)acrylates, trimethylolpropanetrioxyethyl (meth)acrylate, tris(2-hydroxyethyl)isocyanurate tri(meth)acrylate, tris(2-hydroxyethyl)isocyanurate di(meth)acrylate, pentaerythritol tri(meth)acrylate, pentaerythritol tetra(meth)acrylate, dipentaerythritol monohydroxy pentacrylate, dipentaerythritol hexacrylate, tricyclodecane diyl dimethyl di(meth)acrylate and alkoxylated versions, preferably ethoxylated and/or propoxylated, of any of the preceding monomers, and also di(meth) acrylate of a diol which is an ethylene oxide or propylene oxide adduct to bisphenol A, di(meth)acrylate of a diol which is an ethylene oxide or propylene oxide adduct to hydrogenated bisphenol A, epoxy (meth)acrylate which is a (meth) acrylate adduct to bisphenol A of diglycidyl ether, diacrylate of polyoxyalkylated bisphenol A, and triethylene glycol divinyl ether, adduct of hydroxyethyl acrylate, isophorone diisocyanate and hydroxyethyl acrylate, adduct of hydroxyethyl acrylate, toluene diisocyanate and hydroxyethyl acrylate, and amide ester acrylate.

Also mixtures of monomeric compounds can be applied in the coating composition of the present invention. It may even be possible to use a solvent, for example for or during the application of the coating composition onto the substrate. This solvent preferably is removed before the irradiation of the coating composition.

Examples of solvents are tetrahydrofuran, etyhylacetate, butylacetate, toluene, xylene, dimethylformamide. Typical are amounts are between 0 and 20 wt-%, preferably between 0 and 10 wt-%.

The composition used in the present invention contains a dichroic photoinitiator. As with the common photoinitiators, dichroic photoinitiators dissociate when exposed to the correct wavelength and the formed radicals will initiate polymerization of monomers. The dichroic photoinitiator used in the coating composition of the present invention has the property that the light absorption is dependent on the molecular orientation of the molecule. The dichroic photoinitiators selectively dissociate when aligned with the electric field vector of the incoming light.

In the present invention, the dichroic photoinitiators preferably are aligned with the liquid crystalline monomers. Upon irradiation with UV light, only those locations where the orientation axis of the dichroic photoinitiator is planar and parallel with the electrical field vector of the polarized light, absorbance of light takes place, followed by dissociation of the photoinitiator and start of the polymerization reaction.

Examples of dichroic photoinitiators are 1-(4-ethyl-[1 ,1';4',1"]terphenyl-4"-yl)-2-methyl- 2-morpholin-4-yl-propan-1 -one or 1 -(4"-ethyl-2'-fluoro-[1, 1 ';4', 1 "]terphenyl-4-yl)-2- methyl-2-morpholin-4-yl-propan-1-one.

Other examples of dichroic photoinitiators can be found in the below scheme:

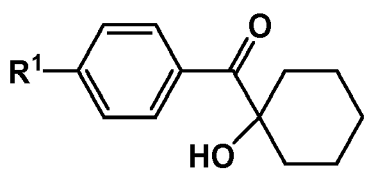

## 1-hydroxy cyclohexyl aryl ketones

$R^1$: 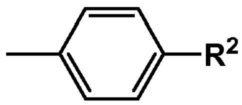

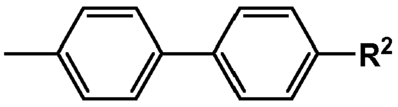

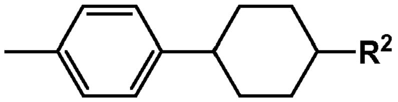

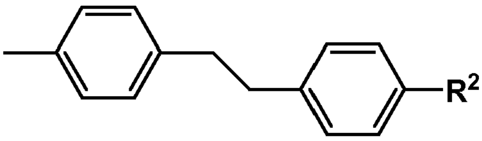

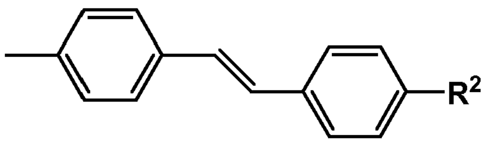

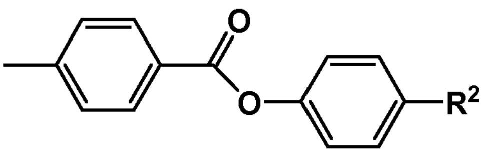

$R^2$: H, Cl, F, CN, OH, $CH_2OH$

$C_nH_{2n+1}$ n= 1 - 12

$O-C_nH_{2n+1}$

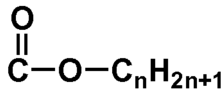

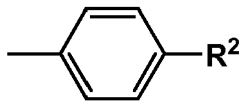

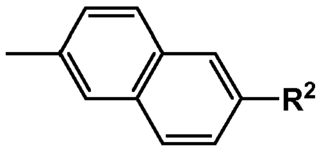

In one embodiment of the invention, non-polarized light is being used to polymerize the coating composition. If non-polarized light is used, the polymerization reaction will start at the surface of the substrate (where the liquid crystalline monomers and the dichroic photoinitiator are aligned parallel to the surface of the substrate), and depending on the amount of light, the layer thickness of polymerized monomers will gradually increase in time in the direction of the homeotropic orientation of the liquid crystalline monomers. By adjusting the amount of irradiation, the amount of polymerization or the depth of polymerization can be controlled. When a low dose of irradiation is used, a thin layer of coating on substrate is obtained, wherein a certain orientation of liquid crystalline material is present. The angle of the orientation will be tilted towards the normal (perpendicular to the surface). When a higher dose is applied, a thicker layer will be polymerised, and the tilted angle will change (closer to normal).

In a preferred embodiment of the invention the orientation of the liquid crystalline material and the dichroic photoinitiator is parallel to the substrate at the surface of the substrate and homeotropic at a certain distance from the substrate (due to the splay structure of the liquid crystalline material). Therefore absorption of actinic radiation will be most effective at the surface of the substrate, and decreasing with the tilt of the crystalline material.

In principle also other angles of incoming light might be chosen. In that case the volume in the layer where minimum absorption takes place is not necessarily located at the interface with air but this minimum may be located somewhere below the surface.

The process of polymerization of the reactive liquid crystal mixtures with a splayed or bended configuration can be carried out on film which is fully exposed with UV light which yields a continuous film. An illustration of such a process is given in figure 6.

The light intensity can also be modulated in place by means of a photomask. In the latter case a structured film is obtained. If the dimension of the exposed area become s relatively small, e.g. of the order of the thickness of the film, the shape of the formed structures will become affected by the dose as well. At small dose pyramidic structures with a strong positive slope will be formed. At higher dose the slope decreases and the structures become more straight. In case the bending ditrection of the liquid crystal is reversed, i.e. perpendicular at the substrate and parallel at the interface with air or an inert gas, structures with a negative slope will be formed.

In a different embodiment of the invention UV exposure can be performed with polarization holography. When

the coating composition is irradiated with polarization holography, the polarization of the actinic radiation will change depending on the location in the film. Since the absorption of radiation by the dichroic photoinitiator is depending on the relative position of the photoinitiator to the direction and polarization of the radiation, the photoinitiator will be activated in certain areas in the film, giving rise to local polymerization reactions and ultimately to the formation of 3-dimensional structures. For example polarization holography can be performed with two circularly polarized beams of opposite handedness, giving rise to polymerization in the form of pyramids attached to the surface of the substrate.

All known dichroic photoinitiators are suitable for the method according to the invention, for example, 1-(4-ethyl-[1 ,1';4',1"]terphenyl-4"-yl)-2-methyl- 2-morpholin-4-yl-propan-1-one or 1-(4"-ethyl-2'-fluoro-[1 ,1';4',1"]terphenyl-4-yl)-2- methyl-2-morpholin-4-yl-propan-1-one. All non-reactive liquid crystals are suitable for use in the method according to the invention, for example as described in Flussige Kristalle in Table II, 1984, edited by Demus & Zascke, VEB Deutscher Verlag fur Grundstoffindustrie. Examples of suitable preferred non-reactive liquid crystals are classes of materials that are known to those familiar in the field as cyanobiphenyls such as 4-cyano-4'-n-pentylbiphenyl, 4-cyano-4'-A7-hexyloxybiphenyl or 4-cyano-4"-n-hexyl-p-terphenyl.

The amount of dichroic photoinitiator typically ranges between 0.01 to 10 wt%, preferably between 0.1 and 5 wt% relative to the total of the coating composition.

The dichroic photoinitiator of the present invention also comprises the photoinitiator system of a dichroic sensitizer and a photoinitiator.

The process of the invention may contain a washing step e): in case a dose of actinic radiation is used for the polymerization step that does not convert all monomers present the residual monomers can be washed away by any conventional washing agent that is suitable to dissolve the monomers used in the coating composition, and which solvent does not substantially swell or distort the cured film during this washing step. After washing, the residual film may be dried, or the film can be postcured with electromagnetic radiation (for example with UV), and/or heat (process step f)).

The coating composition used in the process of the present invention may contain other components like for example inhibitors, retarders, RAFT agents and the like to further control the formation of active radicals to perform polymerization. These components will prolong the shelf life of the mixtures but it will also allow easier processing at elevated temperatures without premature polymerization. Moreover the addition of these components provides a means to adjust the UV dose threshold value for polymerization. Below the threshold dose no polymerization will take place while just above this dose the polymerization will proceed rapidly. The presence of a threshold UV dose supports the structure formation as aimed for in this invention disclosure. There are many polymerization inhibitors known to those who are skilled in the art. Examples of inhibitors are hydroquinone, p-methoxy phenol, t-butyl hydroquinone and tris(N-Nitroso-N-Phenylhydroxylamine) aluminium salt.

Inhibitors, retarders and RAFT agents may be present in amounts from 0-20 wt% (relative to the total of the composition), or preferably between 0.1-10 wt%.

The process of the present invention can be used in many applications, like for example display devices, for in or out coupling of light of organic devices (like for example LED), for retardation or compensation film in optical devices like liquid crystal displays; or viewing angle foil or high pretilt alignment layers.

The invention will be further illustrated with examples, which are not intended to limit the scope of the present invention.

## Experimental

### Materials

The materials used to produce the 3D polymer structures a non-reactive liquid crystal host, E7 (see figure 1, compounds 2a-2d) ; reactive mesogens, RM82 and RM257 (see figure 1 compound 3, n=1 and n=2); the dichroic photoinitiator, BDH-1468 (see figure 1, compound 1); All materials provided by Merck (Southampton, UK).

### Example 1

### Sample Preparation

The mixture used for the creation of the polymeric films with different angles respect to normal, contains approximately 30 w% reactive mesogens (RM82/RM257 in a 2:3 w/w ratio) and 69 % non-reactive liquid crystal E7 as well as a small amount (1 %) of dichroic photoinitiator **1.** To make homogeneous blends and control the thickness of the film, the components were dissolved in Xylene to a concentration of 50 %.

Glass substrates coated with planar polyimide (AL1454, JSR) were prepared. They were subsequently rubbed with a velvet cloth to create a planar alignment layer. The mixture previously described was then spin coated at 1000 rpm for 30 seconds onto the substrates using a Karl Suss *CT 62* spincoater. The amphiphilic nature of the components

of E7 (2a-d) induces homeotropic alignment of the molecules at the LC-air interface. As a result the molecular director follows a splay/bend orientation along the thickness of the film. The molecules at the substrate are at an angle of 90° and the molecules at the surface of the film at angle of 0° respect to the normal.

The substrates, coated with the LC mixture, were then exposed to UV light (OmniCure™ EXFO Series 2000) with an intensity of 0.1124 W/cm$^2$. The exposure was performed under nitrogen atmosphere for a number of exposure times, ranging from 60 seconds to 600 seconds. The cured samples were etched by gently washing them with isopropanol and left to dry.

The film thickness was measured by scratching the polymeric films with the help of a razorblade and observing the scratches with the help of an interferometer (Fogale Nanotech Zoomsurfer 3D). There is a direct relation between thickness of the film and angle of the molecular director respect to normal at the film surface given by the following equation:

$$\alpha = \frac{\pi}{2}\left(1 - \frac{h}{wh_0}\right)$$

Where $\alpha$ is the molecular angle of the outer layer of molecules, i.e. those nearest to the interface with air, with , *w* is the weight fraction of polymerizable monomers in the reactive mixture, $h_o$, is the thickness of the wet film before polymerization, and *h* is the thickness of the sample after developing the film by washing with propanol-2. The angle of the molecular director respect to normal vs. the light dose is represented in Figure 2.

Example 2

For the creation of the 3D structures the following mixture was used: approximately 30 w% reactive mesogens (RM82/RM257 in a 2:3 w/w ratio) and 69 % non-reactive liquid crystal E7 as well as a small amount (1 %) of dichroic photoinitiator 1. To make homogeneous blends, the components were dissolved in dichloromethane to a concentration of 50 %. Subsequently, the solvent was evaporated by heating the mixture to 80 °Cfor approx. 90 minutes.

To obtain nematic LC splays LC cells were produced. One of the substrates was coated with planar polyimide (AL1454, JSR), subsequently cured (180°C for two hours) and rubbed; the other substrate was coated with homeotropic polyimide (AL1211, JSR) and also cured. The cell spacing was 5 $\mu$m; they were filled with the mixtures by capillarity. UV exposure was performed with polarization holography using two circularly polarized beams of opposite handedness (UV laser, Spectra Physics Beam Lok Argon Ion). The exposure time used is 100 seconds at an intensity of 54 mW/cm$^2$. The resulting polymeric structure is shown in the SEM image of figure 3, the surface profile measured with an optical profilometer (Fogale Nanotech Zoomsurfer 3D) is also shown.

Example 3

A second type of cells was used to produce polymeric 3D structures with complex geometry, polymeric pyramids. One of the substrates was spin coated with the linear photopolymerizable material (LPP) from Rolic (Zug, Switzerland). This material can be aligned with the use of UV light, allowing to create complex alignment layers like the one showed in Figure 4.

The LPP coated glass substrate was then heated for 10 minutes at 90°C and subsequently exposed to a polarization hologram created with two orthogonal circularly polarized beams for 100 seconds at an intensity of 61 mW/cm$^2$ (UV laser, Spectra Physics Beam Lok Argon Ion) to create an alignment layer with rotating orientation along one of the axes of the substrates plane, as schematically shown in Figure 4. The other substrate from the cell was coated with homeotropic polyimide (AL1211, JSR) and cured for two hours at 180°C. The cell spacing was 5 $\mu$m and they were filled with the nematic mixture by capillarity. Finally UV exposure was performed again with polarization holography during 100 seconds with an intensity of 54mW/cm$^2$, the orientation of the cell was 90° rotated with respect to the first exposure used to orient the LPP alignment layer. The process is schematically represented in Figure 4.

In all the experiments the etching procedure was performed by submerging the cells or substrates in THF or isopropanol over the night, after which we let the solvent evaporate. The cells were then open to study the polymeric structure, SEM pictures of these structures can be seen in Figure 5.

**Claims**

1. Process for the preparation of a layer comprising oriented molecules on a substrate, comprising the steps of

a. providing a substrate
b. applying a film of a coating composition on the substrate
c. forming a splay or bend liquid crystalline structure within the film
d. applying a dose of electromagnetic radiation to the film to at least partly cure the film,

wherein the coating composition comprises at least one liquid crystalline material having at least one polymerizable group and a monomer having at least two polymerizable groups, and a dichroic photoinitiator.

**2.** The process according to claim 1, wherein after steps a-d the unpolymerized part of the coating composition is removed and optionally an excess of electromagnetic radiation or heat is applied to fully cure the remainder of the film.

**3.** The process according to claim 1 or 2, wherein the monomer having at least two polymerizable groups is a liquid crystalline material.

**4.** The process according to anyone of claims 1-3, wherein the substrate contains an alignment layer.

**5.** The process according to claim 4, wherein the alignment layer is a photoalignment layer.

**6.** The process according to anyone of claims 1-5, wherein the electromagnetic radiation is UV radiation.

**7.** The process according to anyone of claims 1-6, wherein the electromagnetic radiation is a polarization hologram.

**8.** The process according to anyone of claims 1-7, wherein the electromagnetic radiation is patterned through a lithographic mask.

**9.** The process according to anyone of claims 1-8, wherein the polymerizable group is chosen from acrylate, methacrylate, epoxy, vinyl, vinylether, thiol-ene and oxetane Groups.

**10.** The process according to anyone of claims 1-9, wherein the electromagnetic radiation is provided in such a dose that only a part of the layer is cured which provides a cured layer having an angle of orientation at the surface which is tilted towards the normal.

**11.** A process according to anyone of claims 1-10, wherein the dose is adjusted by the addition of an inhibitor, retarder or RAFT material to the reactive mixture.

**12.** Polymeric structures created by exposing a substrate comprises a coating composition having at least one liquid crystalline material having at least one polymerizable group, a monomer having at least two polymerizable groups and a dichroic photoinitiator with a polarization hologram.

**13.** Display device containing a oriented layer as obtained in a process according to anyone of claims 1-11.

**14.** Viewing angle foil comprising polymeric structures according to claim 12, or alignment layers as obtained in a process according to anyone of claims 1-11.

Figures.

1 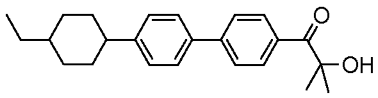

2a 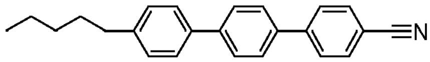

2b 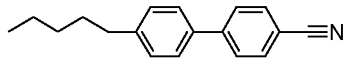

2c 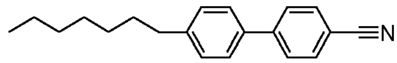

2d 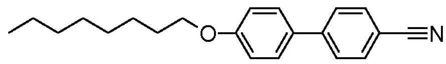

3 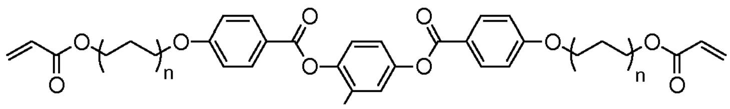

**Figure 1:** 1) Dichroic photoinitiator BDH1468; 2) Components of the nematic mixture E7; 3) Reactive mesogens RM257 (n=1) and RM82 (n=2).

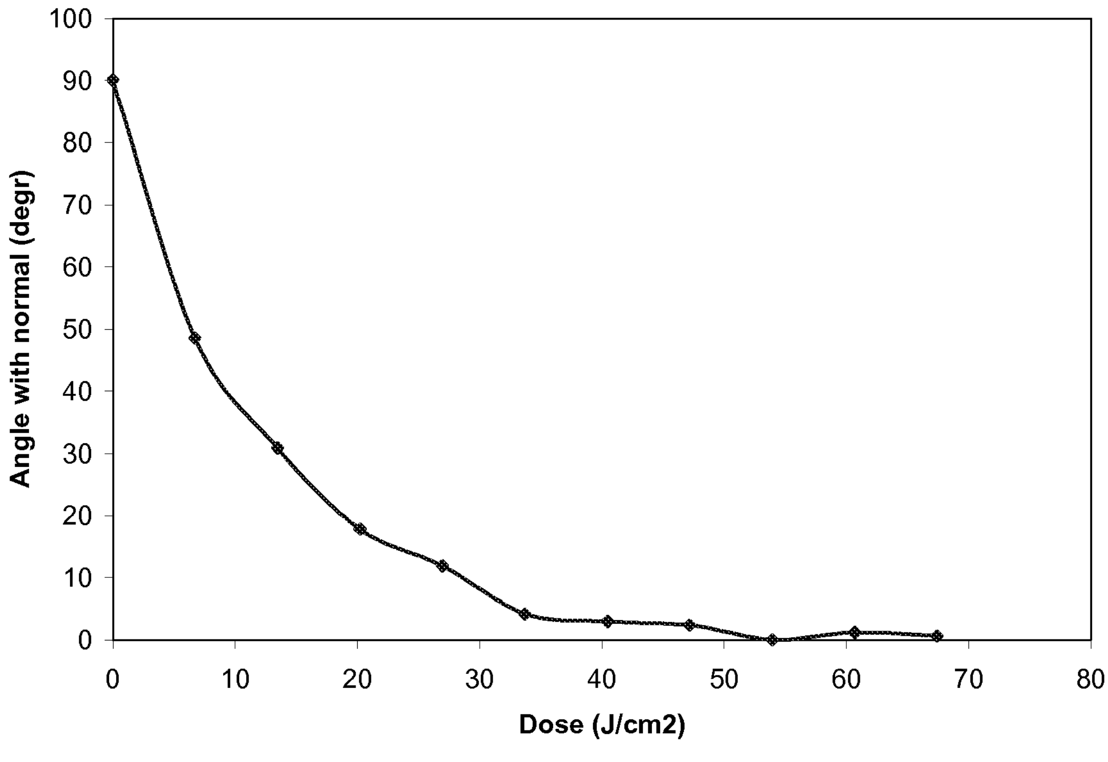


Figure 2; angle (relative to normal) dependence to UV dose

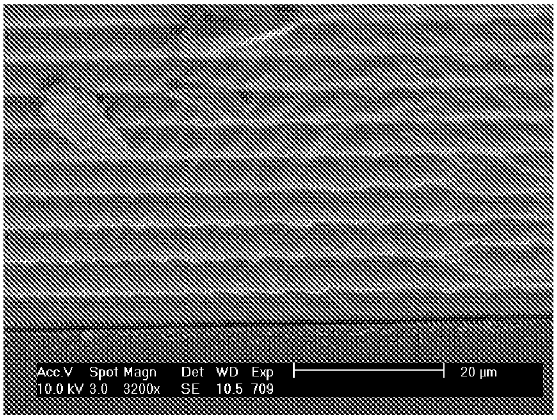


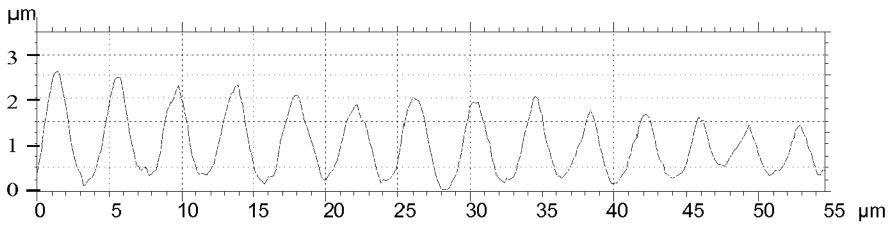


**Figure 3:** A) SEM image of a pattern formed by wedged polymer lines. The alignment prior to polymerization was a splay. For the polymerization polarization holography was used. The circular lines are a consequence of the presence of dust on the beam path. B) Profile of the same sample measured by optical interferometry.

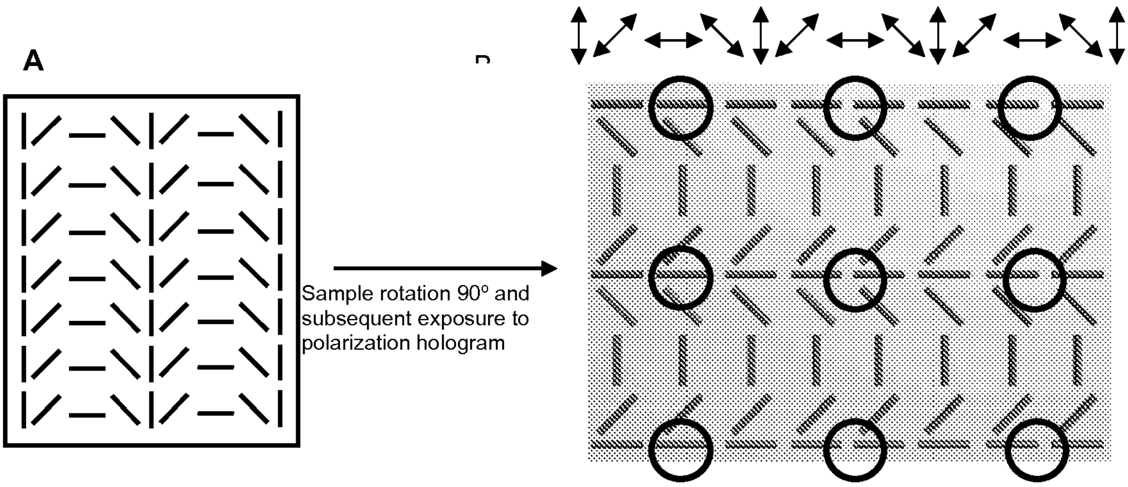


**Figure 4:** A) Representation of the LC alignment in an LPP alignment layer exposed to a polarization hologram. B) Schematic draw of a filled LC cell with an LPP alignment layer and exposed to a polarization hologram, rotated over 90° with respect to the alignment layer, to induce polymerization of the LC material. The areas encircled represent the maximum absorption zones.

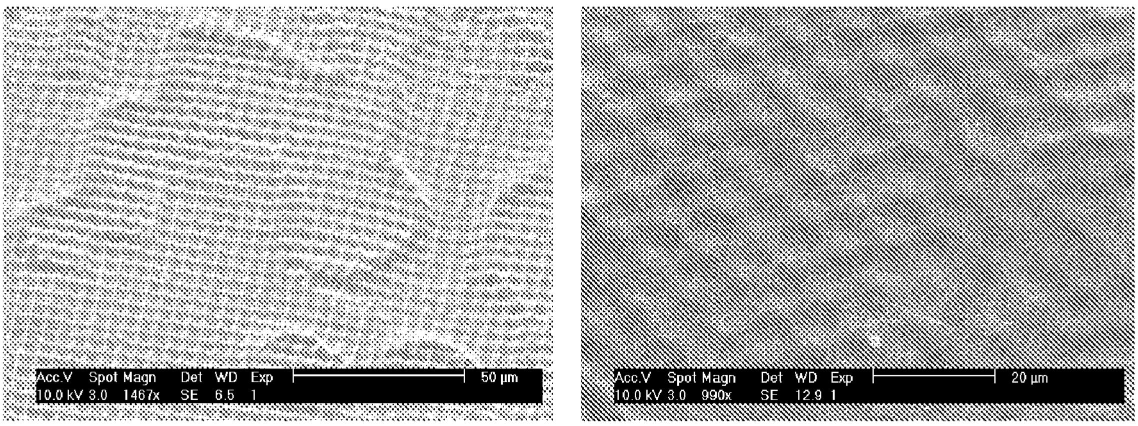


**Figure 5:** SEM pictures of the polymer pyramid structures. They were created by exposing an LC cell with an LPP alignment layer at the bottom substrate and a homeotropic alignment layer at the top substrate to a polarization hologram.

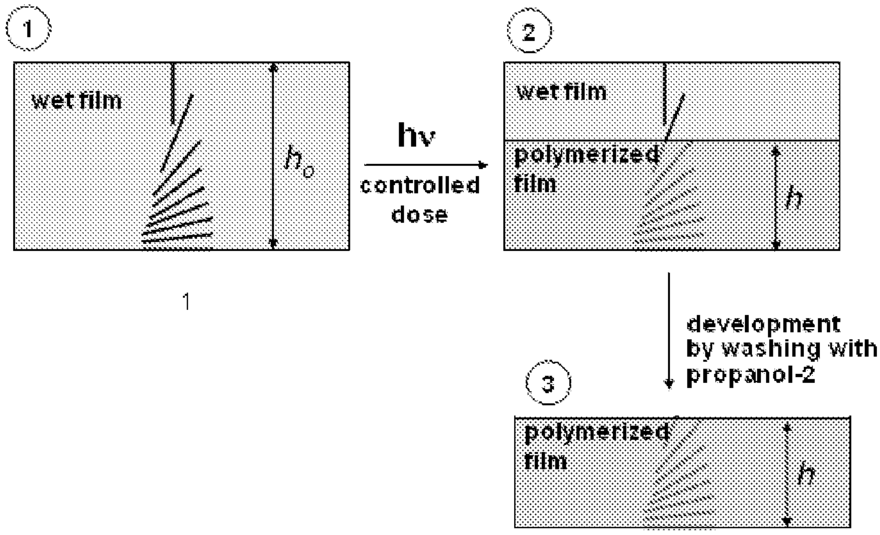


1

**Figure 6**. Formation of a film having a controlled bended optical axis.

1. Is a cross-section of a wet film consisting of rod-like reactive liquid crystalline monomers and provided with a dichroic photoinitiator. The bending lines represent the average local orientation direction of the molecules, including the rod-like shaped photoinitiator. The wet film has a thickness $h_o$.
2. By controlling the UV those a polymerized film is formed with thickness *h*. This is related to the fact that the upper photoinitiator absorb less light which leaves the production of reactive particle, e.g. free radicals, below the threshold value for polymeriozation.

3. The unpolymerized part is dissolved which leaves an upper polymer surface with bended molecules. The local optical axis is parallel to the average local orientation of the molecules.

European Patent Office

# EUROPEAN SEARCH REPORT

Application Number
EP 08 10 3501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | WO 03/054111 A (MERCK PATENT GMBH [DE]; SLANEY KIM [GB]; VERRALL MARK [GB]; PARRI OWAI) 3 July 2003 (2003-07-03)<br>* claims 5-9 * | 12-14<br><br><br>1 | INV.<br>C09K19/38<br>G02B5/30<br>G02F1/13363<br>G02F1/1337<br>C08J5/18 |
| D,A | WO 2006/059895 A (STICHTING DUTCH POLYMER INST [NL]; KJELLANDER BIRGITTA KATARINA C [NL]) 8 June 2006 (2006-06-08)<br>* the whole document * | 1,6 | |
| D,A | WO 97/44702 A (PHILIPS ELECTRONICS NV [NL]; PHILIPS NORDEN AB [SE]) 27 November 1997 (1997-11-27)<br>* the whole document * | 1-14 | |

TECHNICAL FIELDS SEARCHED (IPC)

G02B
C09K
C08J
G02F

The present search report has been drawn up for all claims

| Place of search | Date of completion of the search | Examiner |
|---|---|---|
| The Hague | 12 September 2008 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 08 10 3501

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2008

| Patent document cited in search report | | Publication date | Patent family member(s) | | | Publication date |
|---|---|---|---|---|---|---|
| WO 03054111 | A | 03-07-2003 | AT | 303422 | T | 15-09-2005 |
| | | | AU | 2002366720 | A1 | 09-07-2003 |
| | | | CN | 1602345 | A | 30-03-2005 |
| | | | DE | 60205942 | D1 | 06-10-2005 |
| | | | DE | 60205942 | T2 | 18-05-2006 |
| | | | EP | 1453933 | A1 | 08-09-2004 |
| | | | JP | 2005513241 | T | 12-05-2005 |
| | | | KR | 20040066159 | A | 23-07-2004 |
| | | | TW | 276679 | B | 21-03-2007 |
| | | | US | 2005219447 | A1 | 06-10-2005 |
| WO 2006059895 | A | 08-06-2006 | EP | 1825304 | A1 | 29-08-2007 |
| | | | JP | 2008524340 | T | 10-07-2008 |
| | | | KR | 20070105308 | A | 30-10-2007 |
| | | | WO | 2006085743 | A1 | 17-08-2006 |
| | | | US | 2008203356 | A1 | 28-08-2008 |
| WO 9744702 | A | 27-11-1997 | DE | 69733987 | D1 | 22-09-2005 |
| | | | DE | 69733987 | T2 | 22-06-2006 |
| | | | JP | 11509650 | T | 24-08-1999 |
| | | | US | 5978055 | A | 02-11-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0467456 A
- WO 9744702 A
- WO 2006059895 A
- US 4398803 A
- WO 9524454 B


### Non-patent literature cited in the description


- Flussige Kristalle. VEB Deutscher Verlag, 1984, vol. II